# EUROPEAN PATENT APPLICATION

(11) **EP 0 624 521 A1**
(43) Date of publication of application: **17.11.1994**
(21) Application number: 93500062.0
(22) Date of filing: 11.05.1993
(51) Int. Cl.: B65B 69/00, B65G 60/00, B65G 61/00

(54) **Improved machine for automatically depalletizing/emptying/palletizing all kinds of packing cases**

(71) Applicant: TECNOPAMIC, S.A., Alicante (ES)
(72) Inventor: Sanz Martinez, José Joaquin, 12549 Betxi, Castellon (ES)
(74) Representative: Estela Labrador, Enrique

(57) **Abstract**

Improved machine for automatically depalletizing/emptying/palletizing all kinds of packing cases, formed by a body that takes in pallets loaded with cases and has an end stop mechanism where there is a column with means of elevating a vertically-moving bridge, equipped with a horizontal shaft whose ends bear hydraulically-operated means of grasping each pair of cases at the top of [illegible word] loaded on the pallet and carrying them to the emptying area, comprised of a conveyor band which is placed over the case and then flipped over, such that the upturned case lies on the band which carries the contents and case to the edge, where it is emptied. The empty cases fall onto a means of conveyance lying perpendicular to the preceding band, and there they are carried to an area where empty cases are fitted inside one another in groups of six to be palletized.

## Description

### SECTOR OF APPLICATION OF THE INVENTION

This invention will be applied in that sector of industries which handles the depalletization of all kinds of packing cases, their emptying, and lastly the repalletization of the empty cases, all automatically, regardless of the contents of the aforesaid cases, preferably fruit of any sort which is to undergo later selection.

### STATE OF THE ART

There is a machine with these same functions, patented by the applicant in patent number 8902188 and the corresponding patent amendment number 9001490, which has similar mechanisms but, due to its complexity and numerous elements, is not suitable for production rates of less than 1000 cases per hour. Therefore the new, improved machine mentioned herein has been designed to omit mechanisms and form a more simply operated, easily manufactured and serviced group.

### DESCRIPTION OF THE INVENTION

Improved machine for automatically depalletizing/emptying/palletizing all kinds of packing cases formed by an intake body through which the machine is fed, with a driving chain on which the pallets loaded with cases are placed. On the far end there is a very sturdy side pole which serves to hold a vertically-sliding frame. This frame supports a horizontal shaft on each end of which is mounted a grip for grasping from the pallet the pair of cases encompassed in each movement. There is furthermore a conveyor belt which is first placed on top of the cases and then, by means of a 180° turn, the cases are flipped over such that their contents lie on the said conveyor belt.

The motion of the belt conveys the cases and their contents together to the edge of the belt, at which time the contents fall onto another conveyor belt set up at a lower level leading to the handling zone, while the empty cases fall onto a second band made up of a group of rollers and belts running perpendicularly to the preceding ones, to carry the said cases to an exit ramp where each pair of empty cases are turned 90° in one direction and 180° and 90° in the opposite direction, respectively, to place the cases facing one another and insert one into the other for later palletizing.

Furthermore the empty pallets are carried by a set of rollers and chains to a stacking area where they are picked up by a forklift.

All this automates in the minimum space the process of depalletizing cases, emptying them, coupling the empty cases to occupy the least possible volume, and then palletizing them, while the pallets that are emptied are picked up.

The following is a detailed description of the machine for automatically depalletizing/emptying/palletizing all kinds of packing cases referred to herein, with references to the attached diagram depicting, as a mere non-limiting example, a preferred form of execution subject to all variations of detail that do not entail a fundamental alteration of the essential characteristics of the machine.

The said diagram illustrates an overall perspective view of the machine.

According to the example of execution herein depicted, the machine for automatically depalletizing/emptying/palletizing all kinds of packing cases herein proposed is comprised of an intake body (1) with a cross shaft (3) on whose ends are mounted transmission belts (2) for positioning the pallets loaded with a given number of cases (4) in such a fashion that they are available two-by-two in front of the machine.

This intake body is equipped with an end stop mechanism where the pallet and its load are stopped. On one side of this end stop is a column (6) equipped with means for elevating a bridge (7) to the height of the row of two cases (4) located at the top of the stack of the said cases.

The bridge (7) is equipped with a horizontal shaft (8) whose ends are equipped with plates perpendicular to the said shaft (5), where grips (9) driven by hydraulic means (10) are mounted. Under these grips is a conveyor band (11) whose motion bears the objects placed on it toward the opposite area where the stack of cases (4) is.

This conveyor band is designed to flip over, so that it may be positioned over the open end of the cases and then flipped such that the cases are flipped upside down, so that during the movement of the conveyor band (11) the cases are gradually emptied as their contents approach the outer edge of the conveyor band.

Under this conveyor band is set up another conveyor band (18) that catches the products falling from the overturned cases. Over this belt is installed another conveyor system formed by conveyor belts (12) running parallel to one another in the same direction as the upper band, where the empty cases are caught two by two and carried to another conveyor system running perpendicular to the preceding one, formed by rollers (13) and conveyor belts (14) which carry the empty cases to an end which rises into an exit ramp, where these cases are turned 90° in one direction, the next are turned 90° in the opposite direction, and the next are turned 180°, to face one another in groups of six and thus form a compact packet for later storing in an empty case collecting pallet, featuring a minimum volume in each packet.

On the stop edge of the body (1) is placed a set of rollers (16) for collecting the empty pallet after all cases (4) have been unloaded from it. This pallet is then sent over transmission belts (17) toward a store area (15), where they are stacked by a hydraulic system to be picked up later by a forklift. This sequence is repeated automatically as often as necessary.

Thus organized, the improved machine for automatically depalletizing/emptying/palletizing all kinds of packing cases described herein is vital and convenient to operate, since a forklift is used to place on the body (1) the pallet loaded with cases (4) to the desired height. There the elevator system on the column (6) carries the conveyor band (11) on the bridge (7) to the height of the top row of cases, covering the open mouth of the said cases while it clamps onto their sides with the grips (9). Next it flips the assembly so the open case mouths lie upside down, so that when the belt (11) moves, the packaged products fall onto a second conveyor belt (18) which bears them to the classification area, while the empty cases fall onto the conveyor system (12). From there the empty cases are carried to the system lying perpendicular to the preceding belt (14) and to the end ramp, where they are picked up by the system that turns them 90° in opposite directions and a full 180° to form packets of empty cases to be palletized in groups of six cases fitted perfectly inside one other to occupy the minimum volume.

When the stack of cases (4) has been depalletized and emptied, the empty pallet is picked up by the conveyor system (16) and belts (17) which bear them to the storage area (15) where they are stacked to be picked up later by a forklift.

Its simple operation and full automatization, as it both depalletizes and empties cases, picks up and palletizes properly stacked, fitted cases, and stores empty pallets for later pick-up, make it clear that this machine is a valuable aid in case-emptying industries such as the fruit canning industry, where cases are directly picked up from the pick-up point, fruit is selected, and all the operations described above are performed currently largely semi-manually, even though some operations may be automated.

The form, materials, and proportions may vary as may generally anything that is accessory or secondary to the machine, provided that the essence of the machine described herein is not altered, changed, or modified.

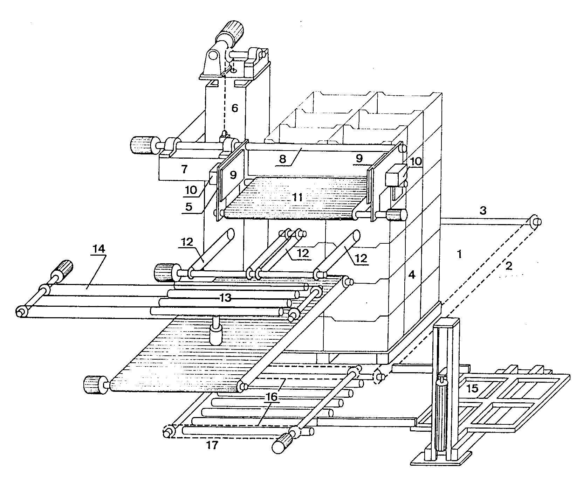

## Claims

1. Improved machine for automatically depalletizing/emptying/palletizing all kinds of packing cases wherein at the end of the body where the pallet loaded with cases is located, there is a very strong column along which a sliding frame runs vertically by means of an elevator system, and the said frame is equipped with a horizontal shaft on whose ends are installed hydraulically-operated grips for holding the top pair of cases loaded on the pallet and carrying them to the emptying area.

2. Improved machine for automatically depalletizing/emptying/palletizing all kinds of packing cases as set forth in claim one above, where in the emptying area is comprised of a conveyor band which is positioned on top of the cases and a mechanical turning assembly which flips the cases upside down with their contents resting on the said conveyor band, which, when started up, slides the cases and contents toward the exit where emptying takes place and the contents fall onto another conveyor band which carries them to the handling area.

3. Improved machine for automatically depalletizing/emptying/palletizing all kinds of packing cases as set forth in claims one and two above, wherein the empty cases fall onto a roller area and are belt-driven by a set of bands in a direction perpendicular to the preceding direction, to the empty case palletizing area.

4. Improved machine for automatically depalletizing/emptying/palletizing all kinds of packing cases as set forth in claims one to three above, wherein the palletizing area begins with a ramp and a 90°-turning system a 180°-turning system and another system turning 90° in the direction opposite from the first, allowing each pair of empty cases to be inserted in the preceding pair, forming six-case packets which are stacked for palletizing.

5. Improved machine for automatically depalletizing/emptying/palletizing all kinds of packing cases as set forth in claims one to four above, wherein under the general body is a system of rollers and chains which picks up the empty pallets and carries them to a stacking area to be picked up later by a forklift. As described and claimed in this descriptive Report comprised of 8 numbered pages typewritten on one side only.
